# EUROPÄISCHE PATENTSCHRIFT

(11) **EP 4 259 962 B1**
(45) Veröffentlichungstag und Bekanntmachung des Hinweises auf die Patenterteilung: **30.09.2026**
(21) Anmeldenummer: 21815366.6
(22) Anmeldetag: 22.11.2021
(51) Int. Cl.: F16M 11/04, B25D 17/28

(54) **ANLAGE MIT HALTETEIL**
INSTALLATION HAVING A HOLDING PART
INSTALLATION DOTÉE D'UNE PARTIE DE MAINTIEN

(30) Priorität: 14.12.2020 US 202063125007 P; 17.03.2021 DE 102021001410
(43) Veröffentlichungstag der Anmeldung: 18.10.2023
(73) Patentinhaber: SEW-EURODRIVE GmbH & Co. KG, 76646 Bruchsal (DE)
(72) Erfinder: MCCORD, Cory, Lyman, SC 29365 (US)
(86) Internationale Anmeldenummer: PCT/EP2021/025456
(87) Internationale Veröffentlichungsnummer: WO 2022/128147

(56) Entgegenhaltungen:
- EP-A1- 2 913 576
- DE-A1- 102011 120 194
- US-A- 1 744 054
- US-A- 2 969 900
- US-A- 6 142 349
- US-B1- 10 703 302

## Beschreibung

Die Erfindung betrifft eine Anlage mit Halteteil.

Es ist allgemein bekannt, dass eine Anlage ein Werkzeug, insbesondere einen Akkubohrer, zum Fertigen von Produkten aufweist.

**Aus der** US 2 696 900 A **ist als nächstliegender Stand der Technik eine Anlage mit Halteteil bekannt.**

**Aus der** EP 2 913 576 A1 **ist ein Schienenfahrzeug mit Halterung für ein elektronisches Gerät bekannt.**

**Aus der** DE 10 2011 120 194 A1 **ist eine Telefonhalterung für ein Fahrzeug bekannt.**

**Aus der** US 10 703 302 B1 **ist ein Kupplungssystem bekannt.**

Der Erfindung liegt daher die Aufgabe zugrunde, eine Anlage effizienter zu machen.

Erfindungsgemäß wird die Aufgabe bei der Anlage nach den in Anspruch 1 angegebenen Merkmalen gelöst.

Wichtige Merkmale der Erfindung bei der Anlage mit Halteteil,
wobei das Halteteil ein Basisteil, Seitenteile, Einführteile, ein Bodenteil und ein Deckelteil aufweist,
wobei das Basisteil zusammen mit den Seitenteilen, den Einführteilen, dem Bodenteil und dem Deckelteil einstückig, insbesondere einteilig, ausgeführt sind,
wobei die Seitenteile derart vom Basisteil abgebogen sind, dass das Halteteil einen mit abnehmendem Abstand zum Basisteil sich verjüngenden Aufnahmebereich aufweist.

Von Vorteil ist dabei, dass die Anlage effizienter gemacht wird, indem das Werkzeug vom Halteteil aufnehmbar ist und somit von dieser gesicherten Position aus eingesetzt werden kann. Außerdem ist das Werkzeug in der Position aufladbar und somit nicht nur gesichert und geschützt aufbewahrbar, sondern die Aufenthaltszeit des Werkzeugs im Halteteil effizient nutzbar.

Die Aufnahme im Halteteil bewirkt auch einen erhöhten Schutz des Werkzeugs, da von der Umgebung herkommende Einwirkungen.

Das Halteteil ist in einfacher Weise beispielsweise an einer Wand der Anlage oder an einem T-Träger der Anlage befestigbar.

Da das Halteteil als Stanz-Biegeteil herstellbar ist, werden die Seitenteile durch Abbiegen eines Metallblechs in Position gebracht. Die Biegestelle bewirkt jedoch eine erhöhte Elastizität, so dass ein kraftschlüssiges Halten des Werkzeugs ermöglicht ist. Denn die mit dem Basisteil erhöht elastisch verbundenen Seitenteile sind beim Einstecken des Werkzeugs in den Aufnahmebereich elastisch auslenkbar und somit in der Lage, das Werkzeug elastisch zu halten. Außerdem ist am Halteteil eine Identifikationskontrolle integrierbar, die nur bei Aufnahme des zugeordneten Werkzeugs eine Beladung desselben freigibt und außerdem eine von dem Ergebnis der Kontrolle abhängige Anzeige bewirkt. Somit ist klar und schnell erkennbar, wenn ein falsches Werkzeug aufgenommen wird. Insbesondere ist sogar schon vor Aufnahme des Werkzeugs eine entsprechende Warnung anzeigbar, wenn die Reichweite der Datenübertragung zwischen einem berührungslos auslesbaren Speicher und dem Lesegerät über den Aufnahmebereich hinaus weiterreicht.

Auf dieses Weise ist ermöglicht, in der Anlage verschieden große Haltemittel für jeweilige Werkzeuge anzuordnen und/oder Haltemittel, die sich nur durch eine vom jeweiligen Haltemittel zur Verfügung gestellte, zwischen den Haltemitteln verschiedene Ladespannung unterscheiden.

Bei einer vorteilhaften Ausgestaltung ist das Halteteil als Stanz-Biegeteil gefertigt, insbesondere aus einem Metallblech,

insbesondere wobei die Blechstärke derart dünn ist, dass die Seitenteile bezogen auf das Basisteil elastisch auslenkbar sind. Von Vorteil ist dabei, dass eine einfache Herstellung ermöglicht ist und durch das Abbiegen eine genügend hohe Elastizität zur Verfügung gestellt wird, die ein elastisches, reibschlüssiges, insbesondere also kraftschlüssiges, Halten des Werkzeugs ermöglicht. Auch wenn also das verwendete Metallblech eine hohe Blechstärke aufweist, ist also ein elastisches Halten ohne besonderen Kraftaufwand und somit auch ohne das Werkzeug beschädigende Federkräfte in einfacher Weise ermöglicht.

Bei einer vorteilhaften Ausgestaltung ist das Bodenteil mit einem Biegewinkel vom Basisteil abgebogen, wobei der Biegewinkel, insbesondere also der innere Winkel zwischen Bodenteil und Basisteil, größer als 90° ist und vorzugsweise einen Wert zwischen 91° und 95° aufweist. Von Vorteil ist dabei, dass der Aufnahmebereich bei immer tieferem Einschieben des Werkzeugs in den Aufnahmebereich immer enger wird und somit die das Werkzeug haltende, durchzunehmende Auslenkung des Bodenteils bewirkte elastische Rückstellkraft, insbesondere Federkraft, zunimmt.

Bei einer vorteilhaften Ausgestaltung ist das Deckelteil mit einem Biegewinkel vom Basisteil abgebogen, wobei der Biegewinkel, insbesondere also der innere Winkel zwischen Deckelteil und Basisteil, größer als 90° ist und vorzugsweise einen Wert zwischen 91° und 120° aufweist. Von Vorteil ist dabei, dass der Aufnahmebereich bei immer tieferem Einschieben des Werkzeugs in den Aufnahmebereich immer enger wird und somit die das Werkzeug haltende, durchzunehmende Auslenkung des Deckelteils bewirkte elastische Rückstellkraft, insbesondere Federkraft, zunimmt.

Bei einer vorteilhaften Ausgestaltung sind die beiden Seitenteile mit einem Biegewinkel vom Basisteil abgebogen, wobei der Biegewinkel, insbesondere also der innere Winkel zwischen dem jeweiligen Seitenteil und dem Basisteil, größer als 90° ist und vorzugsweise einen Wert zwischen 91° und 95° aufweist. Von Vorteil ist dabei, dass der Aufnahmebereich bei immer tieferem Einschieben des Werkzeugs in den Aufnahmebereich immer enger wird und somit die das Werkzeug haltende, durchzunehmende Auslenkung des Bodenteils bewirkte elastische Rückstellkraft, insbesondere Federkraft, zunimmt. Insbesondere bei einem Winkel zwischen 91° und 95° ist der Betrag der Rückstellkraft in genau dem von Menschen aufbringbaren Kraftbereich. Dabei ist die Verwendung von Edelstahl besonders vorteilhaft, da dieser weniger korrosionsanfällig ist.

Bei einer vorteilhaften Ausgestaltung ist das jeweilige Einführteil mit einem Biegewinkel vom jeweiligen Seitenteil abgebogen, wobei der Biegewinkel, insbesondere also der innere Winkel zwischen dem jeweiligen Seitenteil und dem jeweiligen Einführteil, kleiner als 180° ist und vorzugsweise einen Wert zwischen 120° und 170° aufweist. Von Vorteil ist dabei, dass der Aufnahmebereich bei immer tieferem Einschieben des Werkzeugs in den Aufnahmebereich immer enger wird und somit die das Werkzeug haltende, durchzunehmende Auslenkung der Einführteile bewirkte elastische Rückstellkraft, insbesondere Federkraft, zunimmt. Insbesondere bei einem Winkel zwischen 120° und 170° ist der Betrag der Rückstellkraft in genau dem von Menschen aufbringbaren Kraftbereich.

Bei einer vorteilhaften Ausgestaltung sind das Basisteil, die Seitenteile, das Deckelteil, das Bodenteil und/oder die Einführteile jeweils eben ausgeführt. Von Vorteil ist dabei, dass ein einfaches Herstellen aus einem ebenen Metallblech durch Stanzen und nachfolgendes Abbiegen der jeweiligen Teile ermöglicht ist.

Bei einer vorteilhaften Ausgestaltung ist ein Werkzeug, insbesondere der Anlage, im Aufnahmebereich des Halteteils aufgenommen ist und kraftschlüssig mit dem Halteteil verbunden, insbesondere indem die Seitenteile elastisch vorgespannt sind und eine kraftschlüssige Haltefunktion für das Werkzeug ausführen. Von Vorteil ist dabei, dass nur ein geringer Kraftaufwand beim Einführen des Werkzeugs notwendig ist.

**Erfindungsgemäß** weist das Werkzeug einen berührungslos auslesbaren Speicher, insbesondere RFID-Tag oder NFC-Tag, auf, insbesondere in dem eine Identifikationsinformation gespeichert ist. Von Vorteil ist dabei, dass eine Identifikationsinformation im Speicher hinterlegbar ist, welche durch ein Lesegerät auslesbar ist. Da das Auslesen berührungslos erfolgt, ist auch ein Auslesen schon dann ausführbar, wenn das Werkzeug noch nicht im Aufnahmebereich des Halteteils aufgenommen ist.

Bei einer vorteilhaften Ausgestaltung ist am Halteteil ein Lesegerät, das geeignet ausgeführt ist zum berührungslosen Auslesen des Speichers, angeordnet. Von Vorteil ist dabei, dass ein Beladen und ein Anzeigen von Informationen mit einem Anzeigemittel abhängig von der im Speicher gespeicherten Information ermöglicht ist.

Bei einer vorteilhaften Ausgestaltung ist das Lesegerät verbunden mit einem Anzeigemittel und/oder einem Ladegerät,
wobei Anzeigemittel und/oder Ladegerät vom Lesegerät abhängig von der im Speicher gespeicherten und vom Lesegerät berührungslos ausgelesenen Information ansteuerbar ist. Von Vorteil ist dabei, dass einen Warnung anzeigbar ist, die das Einführen eines nicht vorgesehenen Werkzeugs oder zumindest Annähern dessen an den Aufnahmebereich des Halteteils darstellt und/oder die Freigabe einer Ladespannung für das Werkzeug verhindert.

Bei einer vorteilhaften Ausgestaltung ist das Ladegerät mit am Haltemittel angeordneten Kontakten elektrisch verbunden,
wobei das im Halteteil aufgenommene Werkzeug einen Akkumulator aufweist, der mit den Kontakten elektrisch verbindbar ist. Von Vorteil ist dabei, dass durch Kontaktierung elektrischer Strom vom Ladegerät an das durch das Halteteil zentrierte Werkzeug weiterleitbar ist. Somit ist ein vorgesehenes Werkzeug aufladbar, wenn eine Freigabe der Ladespannung vom Lesegerät bewirkt wird.

Bei einer vorteilhaften Ausgestaltung geht die Reichweite der Datenübertragung zwischen dem Speicher und dem Lesegerät über den Aufnahmebereich des Halteteils hinaus, insbesondere also diesen übertrifft. Von Vorteil ist dabei, dass schon vor einführen des Werkzeugs in den Aufnahmebereich eine Warnung am Haltemittel anzeigbar ist, die davor warnt, dass das nicht vorgesehene Werkzeug dem Aufnahmebereich genähert wird.

Bei einer vorteilhaften Ausgestaltung weist das Lesegerät ein Mittel zur Bestimmung der zeitlichen Veränderung der Amplitude des vom Sender gesendeten Signals auf, wobei das Ausgangssignals dieses Mittels einem Vergleichsmittel zugeführt wird, welches das Ausgangssignal mit einem Schwellwert, insbesondere Null, vergleicht und das Anzeigemittel, insbesondere des Lesegeräts oder des Halteteils, abhängig vom Ergebnis des Vergleichs angesteuert wird. Von Vorteil ist dabei, dass nur bei der Annäherung des Werkzeugs zum Haltemittel, insbesondere zum am Haltemittel angeordneten Lesegeräts hin, eine Warnung angezeigt wird. Beim Entfernen des Werkzeugs wird also keine entsprechende Information oder Warnung angezeigt.

Weitere Vorteile ergeben sich aus den Unteransprüchen.

Die Erfindung wird nun anhand von schematischen Abbildungen näher erläutert:

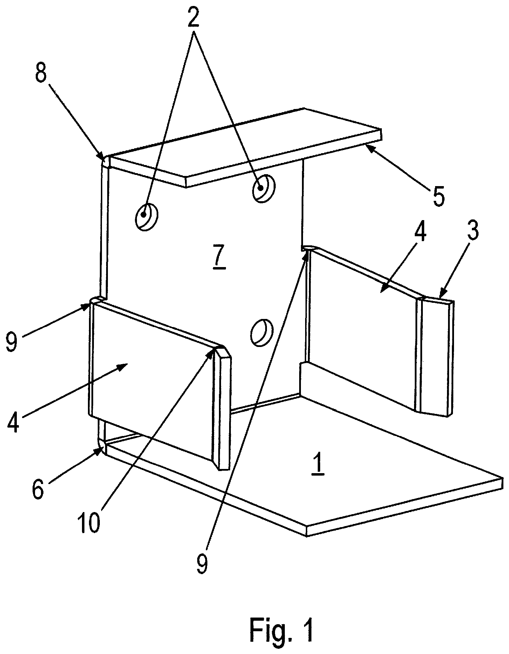

In der Figur 1 ist ein Halteteil einer erfindungsgemäßen Fertigungsanlage in Schrägansicht dargestellt.

Hierbei weist das Halteteil ein Basisteil 7 auf, an welches ein Bodenteil 1 des Halteteils angrenzt, zwei Seitenteile 4 des Halteteils angrenzen und ein Deckelteil 5 des Halteteils angrenzt.

An der vom Basisteil 7 abgewandten Seite des jeweiligen Seitenteils 4 ist ein jeweiliges Einführteil 3 des Halteteils angeordnet.

Vorzugsweise ist das Halteteilsamt seinem Basisteil 7, seinem Deckelteil 5, seinen Seitenteilen 4 mit Einführteilen 3 einstückig, insbesondere einteilig, ausgeführt, wobei die Fertigung als Stanz-Biegeteil eine besonders kostengünstige Herstellung ermöglicht.

Bei dieser Herstellung ist ein Blechbereich aus einem Metallblech ausstanzbar. Durch nachfolgendes Abbiegen von Teilbereichen ist das Halteteil herstellbar. Die Biegewinkel weichen allerdings von 90° ab. Hierdurch wird ein besonders effizientes Nutzen des Halteteils bewirkt.

Am Halteteil ist ein Aufnahmebereich erzeugt, indem das Bodenteil 1 mit einem Biegewinkel 6 vom Basisteil 7 abgebogen wird, wobei der Biegewinkel 6, also der innere Winkel zwischen Bodenteil 1 und Basisteil 7, größer als 90° ist und vorzugsweise einen Wert zwischen 91° und 95° aufweist.

Das Deckelteil 5 ist mit einem Biegewinkel 8 vom Basisteil 7 abgebogen, wobei der Biegewinkel 7, also der innere Winkel zwischen Deckelteil 5 und Basisteil 7, größer als 90° ist und vorzugsweise einen Wert zwischen 91° und 120° aufweist.

Ebenso sind die beiden Seitenteile 4 mit einem Biegewinkel 9 vom Basisteil 7 abgebogen, wobei der Biegewinkel 9, also der innere Winkel zwischen dem jeweiligen Seitenteil 4 und dem Basisteil 7, größer als 90° ist und vorzugsweise einen Wert zwischen 91° und 95° aufweist.

Das jeweilige Einführteil 3 ist mit einem Biegewinkel 10 vom jeweiligen Seitenteil 4 abgebogen, wobei der Biegewinkel 10, also der innere Winkel zwischen dem jeweiligen Seitenteil 4 und dem jeweiligen Einführteil 3, kleiner als 180° ist und vorzugsweise einen Wert zwischen 120° und 170° aufweist.

Die Winkel (6, 8, 9, 10) sind dabei derart gewählt, dass die der durch das Halteteil geschaffene Aufnahmebereich sich mit abnehmendem Abstand zum Basisteil verjüngt. Auf diese Weise ist das Einfädeln schnell und einfach ausführbar, ohne dass ein besonderer Kraftaufwand notwendig wäre.

Die Anlage weist ein Werkzeug, insbesondere Akkuschrauber, Akkubohrer oder dergleichen, auf. Der Akkumulator des Werkzeugs ist als in Gravitationsrichtung unterer Bereich des Werkzeugs vorgesehen und wird auf das Bodenteil 1 aufgeschoben. Beim Einschieben des Akkumulators, insbesondere des Werkzeugs, ist kein besonders großer Kraftaufwand notwendig, da der mit abnehmendem Abstand zum Basisteil 7 sich verjüngende Aufnahmebereich ein Einfädeln erleichtert.

Am Basisteil sind durchgehende Bohrungen 2 angeordnet, insbesondere wobei das durch die Bohrungen 2 gebildete Lochbild ein Quadrat ist. Mittels dieser Bohrungen 2 ist eine einfache Wandbefestigung mit Schrauben ermöglicht, deren Schraubenkopf jeweils auf das Basisteil 7 drückt.

Vorzugsweise ist die Wandstärke, insbesondere also Blechstärke, des Metallblechs derart klein gewählt, dass eine auf das Basisteil 7 bezogene, elastische Auslenkung der Seitenteile 4, des Deckelteils 5 und/oder des Bodenteils 1 mit geringem Kraftaufwand ermöglicht ist.

Somit ist ein im Aufnahmebereich aufgenommenes Werkzeug elastisch gehalten, insbesondere von den beim Einstecken des Werkzeugs in den Aufnahmebereich elastisch ausgelenkten Seitenteilen 4.

Vorzugsweise bildet der Akkumulator die Unterseite des Werkzeugs.

Bei weiteren erfindungsgemäßen Ausführungsbeispielen wird am Halteteil eine elektrische Anschlussvorrichtung befestigt, welche zumindest zwei elektrische erste Kontakte aufweist, die unterschiedliche elektrische Potentiale aufweisen. Somit ist ein elektrisches Aufladen des Akkumulators ermöglicht, wenn dieser Akkumulator zwei entsprechend an ihm angeordnete, zweite Kontakte aufweist, die mit den beiden ersten Kontakten elektrisch verbindbar sind.

Bei weiteren erfindungsgemäßen Ausführungsbeispielen weist das Werkzeug einen berührungslos auslesbaren Speicher, insbesondere RFID-Tag, auf und am Halteteil ist ein zum Auslesen des Speichers geeignet ausgeführtes Lesegerät angeordnet, welches ein Anzeigemittel des Lesegeräts abhängig von der aus dem Speicher berührungslos ausgelesenen Information ansteuert, insbesondere und/oder die an den ersten Kontakten zur Verfügung stellbare Spannung freigibt oder sperrt. Somit ist anzeigbar, ob der zugelassene Akkumulator beziehungsweise das vorgesehene Werkzeug im Halteteil aufgenommen ist oder nicht. Die Beladung wird davon abhängig ausgeführt, insbesondere ob im Speicher die zugelassene Identifikationsinformation gespeichert ist oder nicht.

Bei weiteren erfindungsgemäßen Ausführungsbeispielen hat sich die Verwendung von korrosionsbeständigem Edelstahl wie XCr17 als Material des Halteteils als besonders vorteilhaft erwiesen und auf diese Weise ist auch der Kraftaufwand von Menschen aufbringbar, insbesondere bei Verwendung der oben angegebenen Winkelbereiche zwischen 91° und 95° beziehungsweise zwischen 120° und 170°,

insbesondere wobei die Blechstärke zwischen 0,95 mm und 2,5 mm beträgt.

### Bezugszeichenliste

1 Bodenteil
2 Bohrung
3 Einführteil
4 Seitenteil
5 Deckelteil
6 Biegewinkel
7 Basisteil
8 Biegewinkel
9 Biegewinkel
10 Biegewinkel

## Patentansprüche

1. Anlage **mit Werkzeug und** Halteteil,
**wobei** das Halteteil ein Basisteil (7), Seitenteile (4), Einführteile (3), ein Bodenteil (1) und ein Deckelteil (5) aufweist,
wobei das Basisteil (7) zusammen mit den Seitenteilen (4), den Einführteilen (3), dem Bodenteil (1) und dem Deckelteil (5) einstückig, insbesondere einteilig, ausgeführt sind,
wobei die Seitenteile (4) derart vom Basisteil (7) abgebogen sind, dass das Halteteil einen mit abnehmendem Abstand zum Basisteil (7) sich verjüngenden Aufnahmebereich aufweist,
**dadurch gekennzeichnet, dass** das Werkzeug einen berührungslos auslesbaren Speicher, insbesondere RFID- Tag oder NFC-Tag, aufweist, insbesondere in dem eine Identifikationsinformation gespeichert ist, und wobei am Halteteil ein Lesegerät angeordnet ist, wobei
**die Anlage zum Herstellen von Geräten geeignet ausgeführt ist, wobei das Werkzeug zum Betätigen von Schraubelementen oder von Schraubmuttern oder das Werkzeug zum Bohren in dem Halteteil der Anlage aufgenommen ist und kraftschlüssig mit dem Halteteil verbunden ist, insbesondere indem die Seitenteile (4) elastisch vorgespannt sind und eine kraftschlüssige Haltefunktion für das Werkzeug ausführen,**
**oder dass**
**das Werkzeug, insbesondere der Anlage, im Aufnahmebereich des Halteteils aufgenommen ist und kraftschlüssig mit dem Halteteil verbunden ist, insbesondere indem die Seitenteile (4) elastisch vorgespannt sind und eine kraftschlüssige Haltefunktion für das Werkzeug** ausführen.

2. Anlage nach Anspruch 1,
**dadurch gekennzeichnet, dass**
das Halteteil als Stanz-Biegeteil gefertigt ist, insbesondere aus einem Metallblech,
insbesondere wobei die Blechstärke derart dünn ist, dass die Seitenteile (4) bezogen auf das Basisteil (7) elastisch auslenkbar sind,
insbesondere wobei die Blechstärke zwischen 0,95 mm und 2,5 mm beträgt,
insbesondere wobei das Halteteil aus einem Edelstahl gefertigt ist, insbesondere aus einem korrosionsbeständigen Edelstahl wie XCr17.

3. Anlage nach einem der vorangegangenen Ansprüche,
**dadurch gekennzeichnet, dass**
das Bodenteil (1) mit einem Biegewinkel (6) vom Basisteil (7) abgebogen ist, wobei der Biegewinkel (6), insbesondere also der innere Winkel zwischen Bodenteil (1) und Basisteil (7), größer als 90° ist und vorzugsweise einen Wert zwischen 91° und 95° aufweist.

4. Anlage nach einem der vorangegangenen Ansprüche,
**dadurch gekennzeichnet, dass**
das Deckelteil (5) mit einem Biegewinkel (8) vom Basisteil (7) abgebogen ist, wobei der Biegewinkel (8), insbesondere also der innere Winkel zwischen Deckelteil (5) und Basisteil (7), größer als 90° ist und vorzugsweise einen Wert zwischen 91° und 120° aufweist.

5. Anlage nach einem der vorangegangenen Ansprüche,
**dadurch gekennzeichnet, dass**
die beiden Seitenteile (4) mit einem Biegewinkel (9) vom Basisteil (7) abgebogen sind, wobei der Biegewinkel (9), insbesondere also der innere Winkel zwischen dem jeweiligen Seitenteil (4) und dem Basisteil (7), größer als 90° ist und vorzugsweise einen Wert zwischen 91° und 95° aufweist.

6. Anlage nach einem der vorangegangenen Ansprüche,
**dadurch gekennzeichnet, dass**
das jeweilige Einführteil (3) mit einem Biegewinkel (9) vom jeweiligen Seitenteil (4) abgebogen, wobei der Biegewinkel (9), insbesondere also der innere Winkel zwischen dem jeweiligen Seitenteil (4) und dem jeweiligen Einführteil (3), kleiner als 180° ist und vorzugsweise einen Wert zwischen 120° und 170° aufweist.

7. Anlage nach einem der vorangegangenen Ansprüche,
**dadurch gekennzeichnet, dass**
das Basisteil (7), die Seitenteile (4), das Deckelteil (5), das Bodenteil (1) und/oder die Einführteile (3) jeweils eben ausgeführt sind.

8. Anlage nach einem der vorangegangenen Ansprüche,
**dadurch gekennzeichnet, dass**
das Lesegerät ausgeführt ist zum berührungslosen Auslesen des Speichers.

9. Anlage nach einem der vorangegangenen Ansprüche,
**dadurch gekennzeichnet, dass**
das Lesegerät verbunden ist mit einem Anzeigemittel und/oder einem Ladegerät,
wobei Anzeigemittel und/oder Ladegerät vom Lesegerät abhängig vom der im Speicher gespeicherten und vom Lesegerät berührungslos ausgelesenen Information ansteuerbar ist.

10. Anlage nach einem der vorangegangenen Ansprüche,
**dadurch gekennzeichnet, dass**
das Ladegerät mit am Haltemittel angeordneten Kontakten elektrisch verbunden ist,
wobei das im Halteteil aufgenommene Werkzeug einen Akkumulator aufweist, der mit Kontakten elektrisch verbindbar ist.

11. Anlage nach einem der vorangegangenen Ansprüche,
**dadurch gekennzeichnet, dass**
die Reichweite der Datenübertragung zwischen dem Speicher und dem Lesegerät über den Aufnahmebereich des Halteteils hinausgeht, insbesondere also diesen übertrifft.

12. Anlage nach einem der vorangegangenen Ansprüche,
**dadurch gekennzeichnet, dass**
eine Warnung nur dann angezeigt wird, wenn die vom Lesegerät empfangene Amplitude des vom Speicher gesendeten Signals im zeitlichen Verlauf zunimmt, insbesondere wobei keine Warnung angezeigt wird, wenn diese Amplitude im zeitlichen Verlauf abnimmt.

13. Anlage nach einem der vorangegangenen Ansprüche,
**dadurch gekennzeichnet, dass** das Lesegerät ein Mittel zur Bestimmung der zeitlichen Veränderung der Amplitude des vom Sender gesendeten Signals aufwies, wobei das Ausgangssignals dieses Mittels einem Vergleichsmittel zugeführt wird, welches das Ausgangssignal mit einem Schwellwert, insbesondere Null, vergleicht und das Anzeigemittel, insbesondere des Lesegeräts oder des Halteteils, abhängig vom Ergebnis des Vergleichs angesteuert wird.

## Claims

1. An installation with a tool and a holding part,
wherein the holding part has a base part (7), side parts (4), introduction parts (3), a bottom part (1) and a top part (5),
wherein the base part (7) together with the side parts (4), the introduction parts (3), the bottom part (1) and the top part (5) are embodied in one piece, in particular in one part,
wherein the side parts (4) are bent off from the base part (7) in such a way that the holding part has an accommodation region which tapers with decreasing distance from the base part (7),
**characterised in that** the tool has a storage means which can be read out in a contact-free manner, in particular RFID tag or NFC tag, in particular in which identification information is stored, and with a reader being arranged on the holding part, with
the installation being embodied suitably for producing appliances, with the tool for actuating screwing elements or screw nuts or the tool for drilling being accommodated in the holding part of the installation and being connected to the holding part in a force-fit, in particular by the side parts (4) being under elastic prestress and performing a force-fitting holding function for the tool,
or **in that**
the tool, in particular of the installation, is accommodated in the accommodation region of the holding part and is connected in a force-fit to the holding part, in particular by the side parts (4) being under elastic prestress and performing a force-fitting holding function for the tool.

2. An installation according to claim 1,
**characterised in that**
the holding part is manufactured as a stamped and bent part, in particular from a metal sheet,
in particular with the sheet thickness being so low that the side parts (4) are elastically deflectable relative to the base part (7),
in particular with the sheet thickness being between 0.95 mm and 2.5 mm,
in particular with the holding part being manufactured from a high-grade steel, in particular from a corrosion-resistant high-grade steel such as XCr17.

3. An installation according to one of the preceding claims,
**characterised in that**
the bottom part (1) is bent off from the base part (7) at a bending angle (6), with the bending angle (6), in particular therefore the inner angle between the bottom part (1) and base part (7), being greater than 90° and preferably having a value of between 91° and 95°.

4. An installation according to one of the preceding claims,
**characterised in that**
the top part (5) is bent off from the base part (7) at a bending angle (8), with the bending angle (8), in particular therefore the inner angle between the top part (5) and base part (7), being greater than 90° and preferably having a value of between 91° and 120°.

5. An installation according to one of the preceding claims,
**characterised in that**
the two side parts (4) are bent off from the base part (7) at a bending angle (9), with the bending angle (9), in particular therefore the inner angle between the respective side part (4) and the base part (7), being greater than 90° and preferably having a value of between 91° and 95°.

6. An installation according to one of the preceding claims,
**characterised in that**
the respective introduction part (3) is bent off from the respective side part (4) at a bending angle (9), with the bending angle (9), in particular therefore the inner angle between the respective side part (4) and the respective introduction part (3), being less than 180° and preferably having a value of between 120° and 170°.

7. An installation according to one of the preceding claims,
**characterised in that**
the base part (7), the side parts (4), the top part (5), the bottom part (1) and/or the introduction parts (3) are each made flat.

8. An installation according to one of the preceding claims,
**characterised in that**
the reader is embodied to read out the storage means in a contact-free manner.

9. An installation according to one of the preceding claims,
**characterised in that**
the reader is connected to a display means and/or a charger,
wherein the display means and/or charger can be controlled by the reader dependent on the information stored in the storage means and read out in a contact-free manner by the reader.

10. An installation according to one of the preceding claims,
**characterised in that**
the charger is electrically connected to contacts arranged on the holding means,
with the tool accommodated in the holding part having a battery which is electrically connectable to contacts.

11. An installation according to one of the preceding claims,
**characterised in that**
the range of the data transmission between the storage means and the reader goes beyond the accommodation region of the holding part, in particular therefore exceeds it.

12. An installation according to one of the preceding claims,
**characterised in that**
a warning is displayed only when the amplitude, which is received by the reader, of the signal transmitted from the storage means increases over time, in particular with no warning being displayed if this amplitude decreases over time.

13. An installation according to one of the preceding claims,
**characterised in that** the reader had a means for determining the change over time in the amplitude of the signal transmitted by the transmitter, with the output signal of this means being supplied to a comparison means which compares the output signal with a threshold value, in particular zero, and the display means, in particular of the reader or of the holding part, being controlled dependent on the result of the comparison.

## Revendications

1. Installation avec outil et pièce de maintien,
dans laquelle la pièce de maintien présente une partie de base (7), des parties latérales (4), des parties d'introduction (3), une partie de fond (1) et une partie de couvercle (5),
dans laquelle la partie de base (7) ainsi que les parties latérales (4), les parties d'introduction (3), la partie de fond (1) et la partie de couvercle (5) sont d'un seul tenant, en particulier monobloc, dans laquelle les parties latérales (4) sont pliées à partir de la partie de base (7) de telle sorte que la pièce de maintien présente une zone de réception se rétrécissant avec une distance décroissante par rapport à la partie de base (7),
**caractérisé en ce que** l'outil présente une mémoire lisible sans contact, en particulier une étiquette RFID ou une étiquette NFC, notamment dans laquelle une information d'identification est stockée, et dans laquelle un lecteur est disposé sur la pièce de maintien, dans laquelle
l'installation est adaptée pour la fabrication d'appareils, dans laquelle l'outil pour l'actionnement d'éléments de vissage ou d'écrous ou l'outil pour le perçage dans la pièce de maintien de l'installation est reçu et relié à liaison par friction à la pièce de maintien, en particulier **en ce que** les parties latérales (4) sont précontraintes de façon élastique et exécutent une fonction de maintien à liaison par friction pour l'outil,
ou **en ce que**
l'outil, en particulier de l'installation, dans la zone de réception de la pièce de maintien. est reçu et relié à liaison par friction à la pièce de maintien, en particulier **en ce que** les parties latérales (4) sont précontraintes de façon élastique et exécutent une fonction de maintien à liaison par friction pour l'outil.

2. Installation selon la revendication 1, **caractérisée en ce que** la pièce de maintien est fabriquée comme pièce découpée-pliée, en particulier à partir d'une tôle métallique,
en particulier dans laquelle l'épaisseur de tôle est suffisamment fine pour que les parties latérales (4) soient déformables de façon élastique par rapport à la partie de base (7),
en particulier dans laquelle l'épaisseur de tôle est comprise entre 0,95 mm et 2,5 mm,
en particulier dans laquelle la pièce de maintien est fabriquée à partir d'un acier inoxydable, en particulier à partir d'un acier inoxydable résistant à la corrosion tel que XCr17.

3. Installation selon l'une des revendications précédentes, **caractérisée en ce que** la partie de fond (1) est pliée à partir de la partie de base (7) avec un angle de pliage (6), dans laquelle l'angle de pliage (6), en particulier donc l'angle intérieur entre la partie de fond (1) et la partie de base (7), est supérieur à 90° et présente de préférence une valeur comprise entre 91° et 95°.

4. Installation selon l'une des revendications précédentes, **caractérisée en ce que** la partie de couvercle (5) est pliée à partir de la partie de base (7) avec un angle de pliage (8), dans laquelle l'angle de pliage (8), en particulier donc l'angle intérieur entre la partie de couvercle (5) et la partie de base (7), est supérieur à 90° et présente de préférence une valeur comprise entre 91° et 120°.

5. Installation selon l'une des revendications précédentes, **caractérisée en ce que** les deux parties latérales (4) sont pliées à partir de la partie de base (7) avec un angle de pliage (9), dans laquelle l'angle de pliage (9), en particulier donc l'angle intérieur entre la partie latérale (4) respective et la partie de base (7), est supérieur à 90° et présente de préférence une valeur comprise entre 91° et 95°.

6. Installation selon l'une des revendications précédentes, **caractérisée en ce que** la partie d'introduction (3) respective est pliée à partir de la partie latérale (4) respective avec un angle de pliage (9), dans laquelle l'angle de pliage (9), en particulier donc l'angle intérieur entre la partie latérale (4) respective et la partie d'introduction (3) respective, est inférieur à 180° et présente de préférence une valeur comprise entre 120° et 170°.

7. Installation selon l'une des revendications précédentes, **caractérisée en ce que** la partie de base (7), les parties latérales (4), la partie de couvercle (5), la partie de fond (1) et/ou les parties d'introduction (3) sont chacune réalisées de façon plate.

8. Installation selon l'une des revendications précédentes, **caractérisée en ce que** le lecteur est réalisé pour la lecture sans contact de la mémoire.

9. Installation selon l'une des revendications précédentes, **caractérisée en ce que** le lecteur est relié à un moyen d'affichage et/ou à un chargeur,
dans laquelle le moyen d'affichage et/ou le chargeur sont commandés par le lecteur en fonction de l'information stockée dans la mémoire et lue sans contact par le lecteur.

10. Installation selon l'une des revendications précédentes, **caractérisée en ce que** le chargeur est relié électriquement à des contacts disposés sur le moyen de maintien,
dans laquelle l'outil reçu dans la pièce de maintien présente un accumulateur, qui peut être relié électriquement aux contacts.

11. Installation selon l'une des revendications précédentes, **caractérisée en ce que** la portée de la transmission de données entre la mémoire et le lecteur dépasse la zone de réception de la pièce de maintien, en particulier donc la dépasse.

12. Installation selon l'une des revendications précédentes, **caractérisée en ce qu'** un avertissement n'est affiché que lorsque l'amplitude reçue par le lecteur du signal envoyé par la mémoire augmente dans l'évolution temporelle, en particulier aucun avertissement n'est affiché lorsque cette amplitude diminue dans l'évolution temporelle.

13. Installation selon l'une des revendications précédentes, **caractérisée en ce que** le lecteur présente un moyen pour la détermination de la variation temporelle de l'amplitude du signal envoyé par l'émetteur, dans laquelle le signal de sortie de ce moyen est transmis à un moyen de comparaison, lequel compare le signal de sortie à un seuil, en particulier zéro, et le moyen d'affichage, en particulier du lecteur ou de la pièce de maintien, est commandé en fonction du résultat de la comparaison.
